# EUROPEAN PATENT SPECIFICATION

(11) **EP 2 574 828 B1**
(45) Date of publication and mention of the grant of the patent: **19.03.2014**
(21) Application number: 12186760.0
(22) Date of filing: 01.10.2012
(51) Int. Cl.: F16H 59/02

(54) **Shifter assembly for providing mechanical and electronic actuation to a transmission of a vehicle and a method of operating the shifter assembly**
Schaltanordnung zum Bereitstellen der mechanischen und elektronischen Betätigung für ein Fahrzeuggetriebe und Verfahren zum Betreiben der Schaltanordnung
Ensemble sélecteur de vitesses pour fournir un actionnement mécanique et électronique d'une transmission d'un véhicule et procédé de fonctionnement de l'ensemble sélecteur de vitesse

(30) Priority: 30.09.2011 US 201113249724; 05.09.2012 US 201261696953 P
(43) Date of publication of application: 03.04.2013
(73) Proprietor: Kongsberg Driveline Systems I, Inc., Novi, MI 48377 (US)
(72) Inventor: Skogward, Kenneth, SE-56148 Huskvarna (SE); Behounek, Jeff, Macomb, MI 48042 (US)
(74) Representative: UEXKÜLL & STOLBERG

(56) References cited:
- WO-A1-00/03162
- JP-A- 2005 206 017
- US-B1- 6 382 046

## Description

### BACKGROUND OF THE INVENTION

### 1. Field of the Invention

The subject invention generally relates to a shifter assembly for providing mechanical actuation to a transmission of a vehicle by movement of a control cable and for providing electronic actuation to the transmission of the vehicle and a method of operating the shifter assembly.

### 2. Description of Related Art

In practically every vehicle today, a shifter is utilized to control the transmission of a vehicle. Some shifters mechanically actuate the transmission by movement of a mechanical linkage. For shifters which mechanically actuate the transmission, a driver generally moves a lever which in turn pushes or pulls the mechanical linkage thereby transmitting load to actuate the transmission.

Alternatively, other shifters electronically actuate the transmission. For shifters which electronically actuate the transmission, movement of the lever is electronically sensed. That is, a relative position of the lever is sensed by the shifter and an electronic signal is generated corresponding to the relative position of the lever. A control unit receives and processes the electronic signal and commands the transmission to actuate into a gear position corresponding to the relative position of the lever sensed by the shifter. However, having electronic shifting as the sole means of shifting the transmission is expensive because of the need for relatively expensive electronic components required to achieve performance comparable to shifters which are entirely dependent on mechanical shifting. In addition, the shifter is entirely dependent on electronic shifting and therefore cannot change gears of the transmission during a power failure of the vehicle.

Yet other shifters are capable of providing mechanical actuation as well as electronic actuation to the transmission. That is, such shifters mechanically actuate the transmission in specific gears, and electronically actuate the transmission in the remaining gears. These shifters generally have mechanical components to mechanically actuate the transmission. However, these shifters neither provide a robust structure nor method to prevent the mechanical components from unexpectedly moving out of position without the intent of the driver of the vehicle when the shifter is electronically actuating. As a result, there is an increased possibility that the transmission will be damaged. Further, U.S. Pat. No. 6,382,046 to Wang discloses a shifter capable of providing mechanical actuation as well as electronic actuation to the transmission. The shifter includes a cable block lever and a cable attachment bracket which pivot to mechanically actuate the transmission. However, the cable block lever may only indirectly urge the cable attachment bracket to pivot. That is, the cable block lever is fixed to the cable attachment bracket and must press against a wall of the shifter in order to create leverage to force the cable attachment bracket to pivot.

Therefore, there remains an opportunity to develop a shifter that provides both mechanical and electronic actuation to a transmission by utilizing a cable block lever and a cable attachment bracket being separated from each other such that the cable block lever itself urges the cable attachment bracket to pivot in order to provide mechanical actuation. In addition, there remains an opportunity to develop a shifter with the cable block lever itself preventing the cable attachment bracket from unexpectedly moving out of position without the intent of the driver of the vehicle when the shifter is electronically actuating the transmission.

### SUMMARY OF THE INVENTION

The subject invention provides a shifter assembly for providing mechanical actuation to a transmission of a vehicle by movement of a control cable and for providing electronic actuation to the transmission of the vehicle. The shifter assembly includes a housing and a shift lever coupled to the housing. The shift lever is pivotable about a first axis in a first mode for providing mechanical actuation to the transmission, and a second mode for providing electronic actuation to the transmission. The shifter assembly further includes an arm coupled to the housing and pivotable about the first axis concurrently with the shift lever in at least the first mode. The arm includes a first engagement surface and a second engagement surface. The shifter assembly also includes a cam coupled to the housing and pivotable about a second axis spaced from the first axis between a first position and a second position for moving the control cable to mechanically actuate the transmission. The first engagement surface of the arm urges the cam to move between the first and second positions as the shift lever pivots in the first mode such that the arm pivots about the first axis concurrently with the cam pivoting about the second axis for moving the control cable and providing mechanical actuation to the transmission. The second engagement surface of the arm abuts the cam as the shift lever pivots in the second mode such that the arm pivots about the first axis while the cam remains stationary.

Additionally, a method of operating the shifter assembly is provided. The method includes the steps of concurrently pivoting the shift lever and the arm about the first axis in a first mode to provide mechanical actuation to a transmission, and engaging the first engagement surface of the arm with the cam to simultaneously rotate the cam about the second axis concurrently with the arm pivoting in the first mode. The method further includes the step of pivoting the shift lever about the first axis in a second mode to provide electronic actuation to the transmission. In addition, the method further includes the step of abutting the second engagement surface of the arm against the cam to prevent movement of the cam during pivoting of the shift lever in the second mode.

Accordingly, the shifter assembly provides both mechanical and electronic actuation to the transmission with the arm and the cam of the shifter assembly being separated from each other and with the arm urging the cam to pivot to provide mechanical actuation, and with the arm also preventing the cam from unexpectedly moving out of position without the intent of the driver of the vehicle when the shifter assembly is in the second mode thereby decreasing the possibility that the transmission will be damaged.

### BRIEF DESCRIPTION OF THE DRAWINGS

Advantages of the present invention will be readily appreciated, as the same becomes better understood by reference to the following detailed description, when considered in connection with the accompanying drawings.
FIG. 1 is a side view of a shifter assembly including a shift lever in a park position and a cam in a first position, according to a first embodiment of the present invention.
FIG. 2 is an exploded view of the shifter assembly according to the first embodiment of the present invention.
FIG. 3 is a side view of the shifter assembly with the shift lever in a reverse position and the cam in a second position, according to the first embodiment of the present invention
FIG. 4 is a side view of the shifter assembly with the shift lever in a neutral position, according to the first embodiment of the present invention.
FIG. 5 is a side view of the shifter assembly with the shift lever in a drive position, according to the first embodiment of the present invention.
FIG. 6 is a plan view of a first shift path, a second shift path, and a third shift path which accommodate movement of the shift lever.
FIG. 7 is a side view of the shifter assembly with the shift lever in the park position and the cam in the first position, according to a second embodiment of the present invention.
FIG. 8 is a side view of the shifter assembly including the shift lever in the reverse position, according to the second embodiment of the present invention.
FIG. 9 is a side view of the shifter assembly with the shift lever in the neutral position, according to the second embodiment of the present invention.

### DETAILED DESCRIPTION OF THE INVENTION

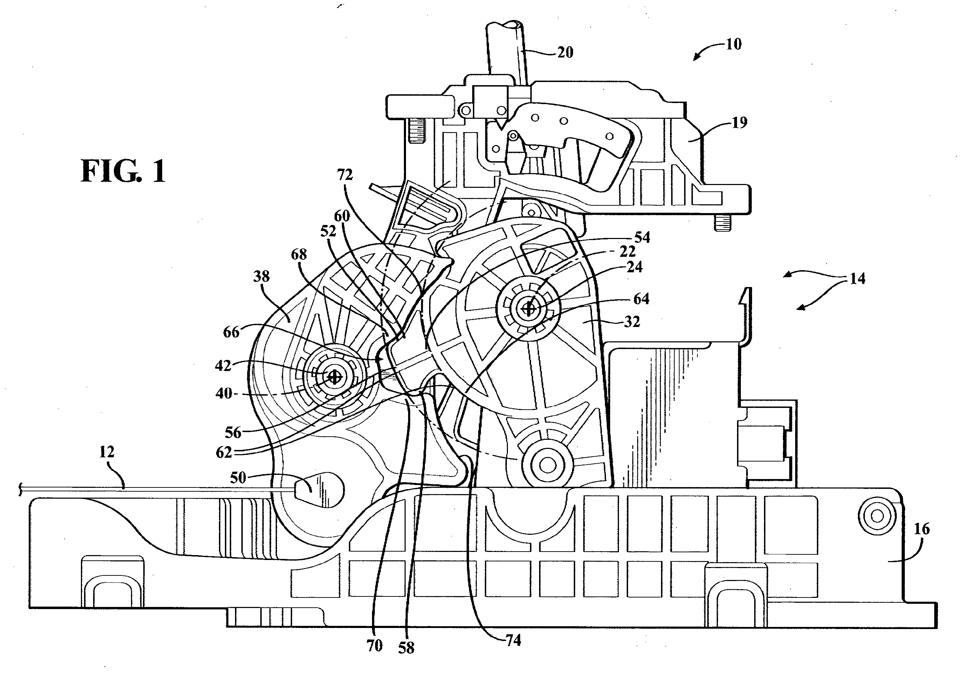

Referring to the Figures, wherein like numerals indicate like or corresponding parts throughout the several views, a shifter assembly 10 is generally shown in FIGS. 1-5, and 7-9. The shifter assembly 10 is utilized with a transmission of a vehicle. Specifically, the shifter assembly 10 provides mechanical actuation to the transmission of the vehicle by movement of a control cable 12. Additionally, the shifter assembly 10 provides electronic actuation to the transmission of the vehicle.

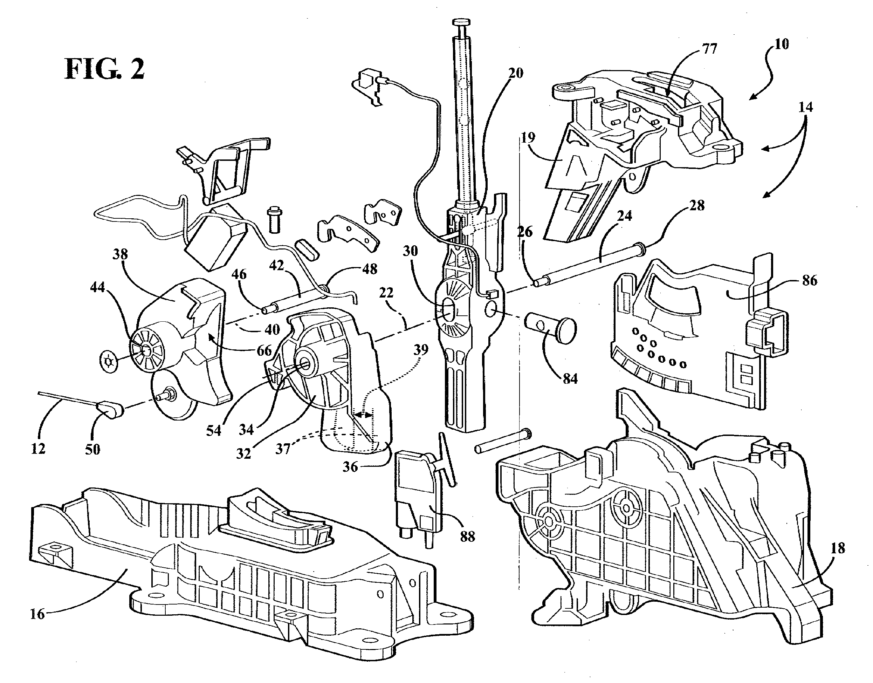

The shifter assembly 10 includes a housing 14 which may further include a base 16. As shown in FIG. 2, the housing 14 may also include a casing 18 coupled to the base 16, and more specifically disposed above the base 16. For illustrative purposes, the casing 18 of the housing 14 has been removed in FIGS. 1, 3-5, and 7-9. The housing 14 may further include a cover 19 being partially disposed above the casing 18 and coupled to the casing 18 and the base 16. It is to be appreciated that the housing 14 may be any configuration for accommodating components of the shifter assembly 10.

The shifter assembly 10 further includes a shift lever 20 coupled to the housing 14 and pivotable about a first axis 22 in a first mode for providing mechanical actuation to the transmission. Furthermore, the shift lever 20 is pivotable about the first axis 22 in a second mode for providing electronic actuation to the transmission. Specifically, mechanical actuation of the transmission by movement of the control cable 12 is provided as the shift lever 20 pivots in the first mode. The first mode and the second mode will be described in further detail below.

As mentioned above, the shift lever 20 is pivotable about the first axis 22. In one embodiment, as shown in FIGS. 1-5, the shift lever 20 pivots about the first axis with respect to a first shaft 24. The first shaft 24 includes a first distal end 26 and a second distal end 28 spaced opposite the first distal end 26. The first and second distal ends 26, 28 of the first shaft 24 are coupled to the casing 18 of the housing 14. The shift lever 20 may define a hollow 30 for receiving the first shaft 24. As such, the shift lever 20 is pivotable about the first axis 22 and coupled to the housing 14 by the first shaft 24.

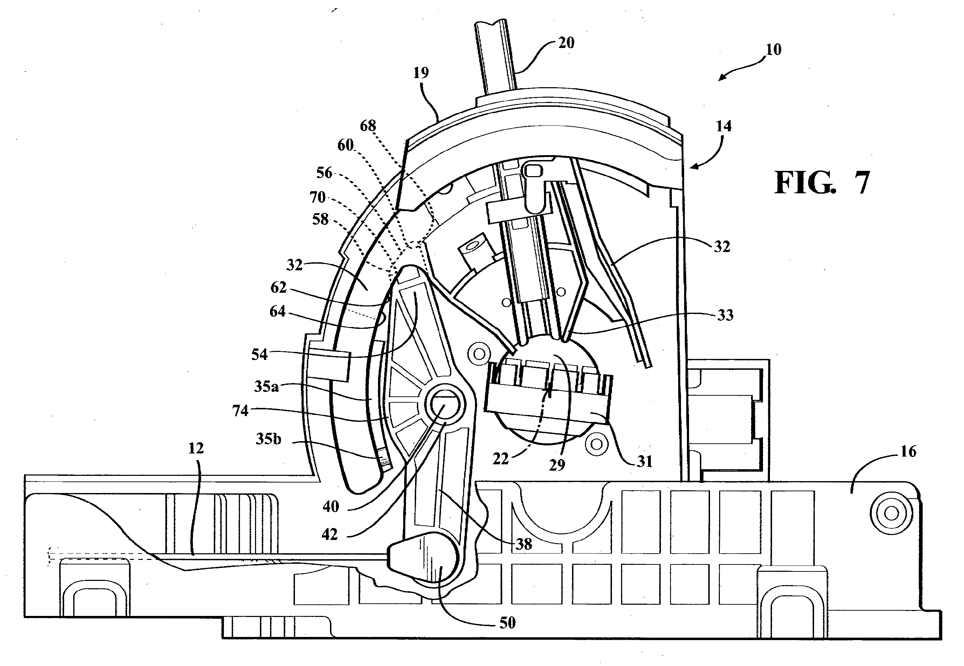

In another embodiment, as shown in FIGS. 7-9, the shift lever 20 pivots about the first axis with respect to a ball 29. The ball 29 is supported by a socket 31 and rotates within the socket 31. Generally, the socket 31 is coupled to the housing 14 and remains stationary with respect to the housing 14. The first axis 22 is defined generally with respect to a spherical center of the ball 29 such that the first axis 22 intersects the spherical center. The shift lever 20 may be coupled to the ball 29 according to any suitable method.

It is to be appreciated that the shift lever 20 may pivot about the first axis 22 according to other configurations not specifically recited herein without departing from the scope of the present invention. Furthermore, the position of the first axis 22 need not remain stationary or fixed with respect to the housing 14 and/or the shift lever 20. That is, the position of the first axis 22 may move in response to movement of components of the shifter assembly 10, such as the shift lever 20, and the like.

The shifter assembly 10 further includes an arm 32 coupled to the housing 14 and pivotable about the first axis 22 concurrently with the shift lever 20 in at least the first mode. The arm 32 and the shift lever 20 are both disposed and pivotable about the first axis 22. In one embodiment, as shown in FIGS. 1-5, the arm 32 defines an aperture 34 and the first shaft 24 is disposed through the aperture 34 of the arm 32. In another embodiment, as shown in FIGS. 7-9, the arm 32 defines at least one distal tab 33 and the ball 29 defines at least one cavity for receiving the distal tab 33. The distal tab 33 of the arm 32 may be coupled to the ball 29 according to any suitable method. In either embodiment, the arm 32 and the shift lever 20 are disposed and pivotable about the first axis 22.

The arm 32 may be coupled to the housing 14 according to various methods. In one instance, the arm 32 may couple to the housing 14 by being disposed about the first shaft 24. Alternatively, the arm 32 may couple to the housing 14 by being coupled to the ball 29. The housing 14 may also include a guide feature for coupling the arm 32 to the housing 14. For instance, as shown in FIGS. 7-9, the housing 14 defines a guide channel 35a and the arm 32 defines a projection 35b slidably disposed in the guide channel 35a for channeling the arm 32 along a predetermined guide path, and/or preventing the arm 32 and other components of the shifter assembly 10 from rotation.

The arm 32 and the shift lever 20 are concurrently pivotable about the first axis 22. In one embodiment, as shown in FIG. 2, the arm 32 includes a catch 36 adjacent the base 16 of the housing 14. The catch 36 has a pair of flanges 37 extending from the arm 32 with the pair of flanges 37 defining a gap 39. The shift lever 20 is selectively disposed in the gap 39 thus engaging the catch 36. The shift lever 20 selectively engages the catch 36 such that the arm 32 is pivotable concurrently with the shift lever 20 in response to movement of the shift lever 20 in at least the first mode. It is to be appreciated that the shift lever 20 may selectively engage the arm 32 using any suitable method without departing from the scope of the present invention. For instance, in another embodiment, the shift lever 20, instead of the arm 32, may include the catch 36. In another embodiment, the shift lever 20 is continuously engaged with the arm 32 such that the arm 32 is pivotable concurrently with the shift lever 20 in response to movement of the shift lever 20 in the first mode and the second mode.

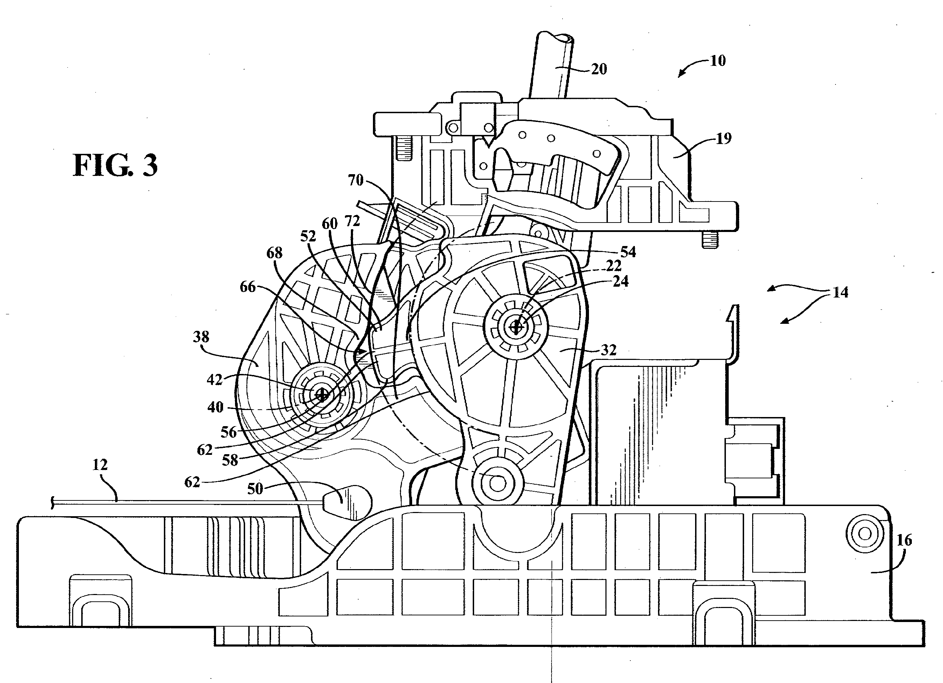

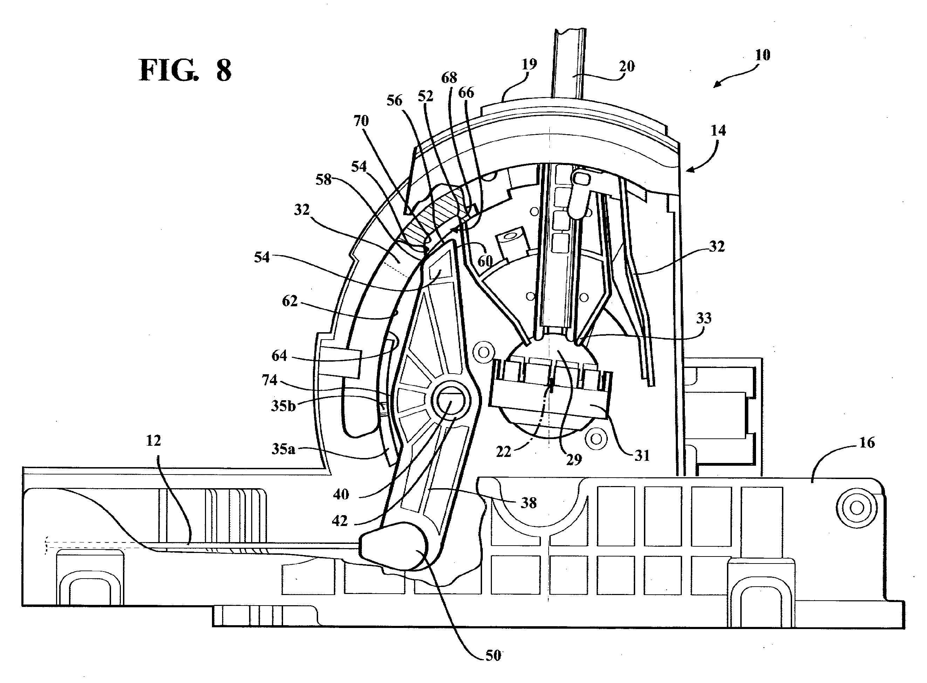

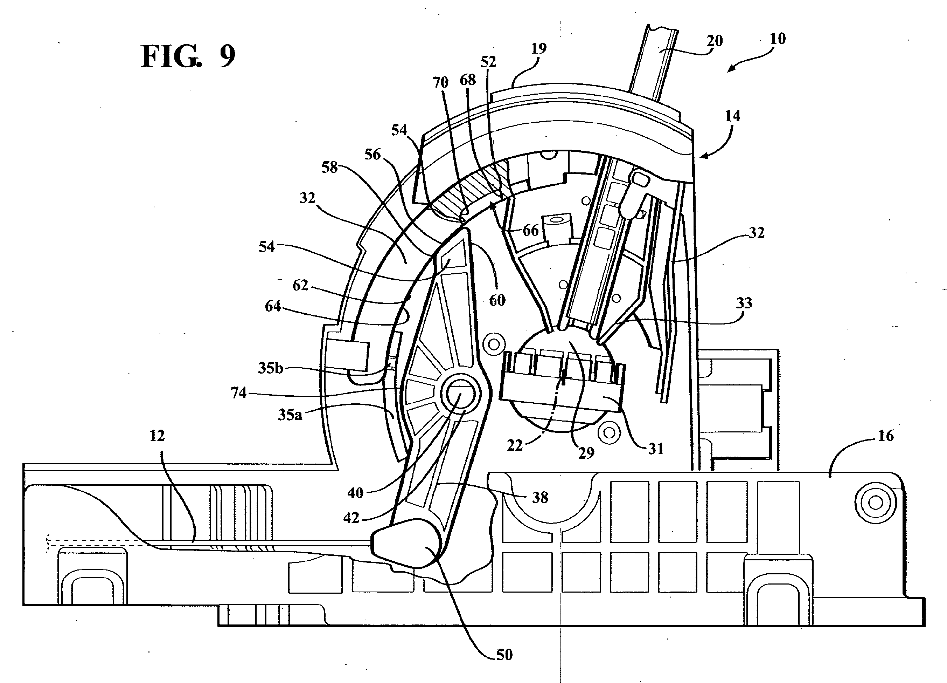

The shifter assembly 10 further includes a cam 38 coupled to the housing 14 and pivotable about a second axis 40 spaced from the first axis 22 between a first position and a second position for moving the control cable 12 to mechanically actuate the transmission. Specifically, the cam 38 is pivotable about a second shaft 42. In one embodiment, the cam 38 is shown in the first position in FIG. 1 and in the second position in FIGS. 3-5. In another embodiment, the cam 38 is shown in the first position in FIG. 7 and in the second position in FIGS. 8 and 9. The cam 38 defines an opening 44 for receiving the second shaft 42. The second shaft 42 has a first lateral end 46 and a second lateral end 48 being spaced opposite the first lateral end 46. The first and second lateral ends 46, 48 of the second shaft 42 may be coupled to the casing 18 of the housing 14. As such, the cam 38 is pivotable about the second axis 40 and coupled to the housing 14.

The arm 32 is separated from the cam 38 such that the arm 32 rotates about the first axis 22 independently of the cam 38 as the shift lever 20 pivots in at least the second mode. As described above, the arm 32 is pivotable about the first axis 22 and the cam 38 is pivotable about the second axis 40. The second axis 40 is spaced apart from the first axis 22. Separation of the arm 32 and the cam 38 enables the arm 32 to directly urge the cam 38 to pivot to provide mechanical actuation, and enables the arm 32 to prevent the cam 38 from unexpectedly moving out of position without the intent of the driver of the vehicle when the shifter assembly 10 is in the second mode. Generally, the first axis 22 and the second axis 40 are disposed substantially parallel to one another. However, it is to be appreciated that the first axis 22 and the second axis 40 may be oriented and/or spaced in any other suitable manner.

As mentioned above, the cam 38 is pivotable between the first position and the second position for moving the control cable 12 to mechanically actuate the transmission. The control cable 12 has a first end 50 and a second end opposite the first end 50. The first end 50 of the control cable 12 is coupled to the shifter assembly 10. Specifically, the first end 50 of the control cable 12 is coupled to the cam 38. The second end of the control cable 12 is generally coupled to the transmission. For simplicity of illustration, the second end of the control cable 12 is not shown in the Figures. As the cam 38 pivots between the first position and the second position, the first end 50 of the control cable 12 will move in response to movement of the cam 38. In turn, the control cable 12 will create a pushing or pulling force to mechanically actuate the transmission. As such, the cam 38 is pivotable between the first position and the second position for moving the control cable 12 to mechanically actuate the transmission.

The arm 32 includes a first engagement surface 52. According to one embodiment, as illustrated in FIGS. 1-5, the arm 32 includes an extension 54 extending from the arm 32 transverse to the first axis 22. The extension 54 is generally disposed between the first axis 22 and the second axis 40 and extends from the arm 32 towards the cam 38. The extension 54 includes a front face 56 having an arcuate configuration. The extension 54 further includes a bottom face 58 disposed adjacent the front face 56. The extension 54 further includes a top face 60 being disposed adjacent the front face 56. The top face 60 is disposed opposite the bottom face 58. As such, the front face 56 is disposed between the top face 60 and the bottom face 58. The top face 60 and the bottom face 58 generally have a contoured surface to allow smooth engagement between the arm 32 and the cam 38, as will be described below. However, it is to be appreciated that the top face 60 and the bottom face 58 may be any suitable surface to facilitate abutment between the arm 32 and the cam 38. Additionally, the front face 56 may be any suitable configuration, such as having a contoured configuration, or the like. In this embodiment, the top face 60 and the bottom face 58 of the extension 54 define the first engagement surface 52. As will be described in greater detail below, the first engagement surface 52 of the arm 32 urges the cam 38 to move between the first and second positions as the shift lever 20 pivots in the first mode. The front face 56, the bottom face 58, and the top face 60 collectively define a rectangular configuration for the extension 54. However, it is to be appreciated that the extension 54 may be any suitable configuration.

The arm 32 further includes a second engagement surface 62. According to the embodiment illustrated in FIGS. 1-5, the arm 32 includes a first profile 64 disposed adjacent the extension 54. The first profile 64 is disposed adjacent the bottom face 58 of the extension 54. The first profile 64 generally faces the cam 38 and has an arcuate configuration. In this embodiment, the first profile 64 of the arm 32 and the front face 56 of the extension 54 define the second engagement surface 62. As will be described in greater detail below, the second engagement surface 62 of the arm 32 abuts the cam 38 as the shift lever 20 pivots in the second mode such that the arm 32 pivots about the first axis 22 while the cam 38 remains stationary.

In the embodiment in FIGS. 1-5, the cam 38 defines a groove 66 with the extension 54 of the arm 32 engaging the groove 66. The groove 66 is generally disposed between the first axis 22 and the second axis 40. The groove 66 is defined by a top edge 68 and a bottom edge 70 of the cam 38. As illustrated in FIG. 1, the shift lever 20 is in a park "P" position with the top edge 68 of the cam 38 abutting the top face 60 of the extension 54 and the bottom edge 70 of the cam 38 abutting the bottom face 58 of the extension 54. As such, the top edge 68 and the bottom edge 70 of the cam 38 are disposed adjacent one another.

In the embodiment in FIGS. 1-5, the groove 66 is further defined by a front edge 72 of the cam 38. The front edge 72 of the cam 38 is disposed adjacent the top edge 68. As such, the top edge 68 is disposed between the front edge 72 and the bottom edge 70. The front edge 72 generally has an arcuate configuration and faces the arm 32. In the first mode, the extension 54 of the arm 32 is disposed in the groove 66 of the cam 38 with the top edge 68 of the cam 38 abutting the top face 60 of the extension 54, and the bottom edge 70 of the cam 38 abutting the bottom face 58 of the extension 54. In addition, the front edge 72 of the cam 38 abuts the arm 32 such that the cam 38 fits firmly against the arm 32 for securing the cam 38 to the arm 32 in the first mode.

According to another embodiment, as illustrated in FIGS. 7-9, the arm 32, rather than the cam 38, defines the groove 66, and the cam 38, rather than the arm 32 includes the extension 54. The extension 54 of the cam 38 engages the groove 66 of the arm 32. For simplicity, features of the extension 54 and the groove 66 that are consistent between the embodiment in FIGS. 1-5 and the embodiment in FIGS. 7-9 are described using consistent terms. This is so even though the extension 54 is associated with the arm 32 in the embodiment in FIGS. 1-5 but with the cam 38 in the embodiment in FIGS. 7-9, and although the groove 66 is associated with the cam 38 in the embodiment in FIGS. 1-5 but with the arm 32 in the embodiment in FIGS. 7-9.

According to the embodiment in FIGS. 7-9, the extension 54 of the cam 38 extends from the cam 38 towards the arm 32. The extension 54 of the cam 38 includes the front face 56 having preferably an arcuate or contoured configuration. The extension 54 of the cam 38 further includes the bottom face 58 and the top face 60 each disposed adjacent the front face 56. The top face 60 is disposed opposite the bottom face 58 such that the front face 56 is disposed between the top face 60 and the bottom face 58. The top face 60 and the bottom face 58 may have any suitable profile to facilitate abutment between the cam 38 and the arm 32.

In the embodiment in FIGS. 7-9, the extension 54 of the cam 38 engages the groove 66 of the arm 32. The arm 32 includes the top edge 68 and the bottom edge 70 disposed adjacent one another. The groove 66 of the arm 32 is defined by the top edge 68 and the bottom edge 70. In this embodiment, the top edge 68 and the bottom edge 70 of the arm 32 define the first engagement surface 52. In FIG. 7, the shift lever 20 is in the park "P" position with the top edge 68 of the arm 32 abutting the top face 60 of the extension 54 and the bottom edge 70 of the arm 32 abutting the bottom face 58 of the extension 54.

As with the embodiment in FIGS. 1-5, the arm 32 includes the first profile 64 in the embodiment in FIGS. 7-9. The first profile 64 is disposed adjacent the extension 54 of the cam 38. The first profile 64 generally faces the cam 38 and has an arcuate configuration. In the embodiment in FIGS. 7-9, the first profile 64 of the arm 32 defines the second engagement surface 62. The second engagement surface 62 of the arm 32 abuts the cam 38 as the shift lever 20 pivots in the second mode such that the arm 32 pivots about the first axis 22 while the cam 38 remains stationary, as will be described in greater detail below. In FIG. 8, the shift lever 20 is in a reverse "R" position with the first profile 64 of the arm 32 abutting the front face 56 of the extension 54 of the cam 38.

The first engagement surface 52 of the arm 32 urges the cam 38 to move between the first and second positions as the shift lever 20 pivots in the first mode such that the arm 32 pivots about the first axis 22 concurrently with the cam 38 pivoting about the second axis 40 for moving the control cable 12 and providing mechanical actuation to the transmission. In the embodiment illustrated in FIG. 3, the shift lever 20 is in the reverse "R" position with the first engagement surface 52 of the arm 32 interacting with the groove 66 of the cam 38. In particular, the top face 60 of the extension 54 of the arm 32 abuts the top edge 68 of the cam 38 to urge the cam 38 to move from the first position to the second position as the shift lever 20 pivots in a first direction in the first mode. In the embodiment illustrated in FIG. 8, the shift lever 20 is in the reverse "R" position with the first engagement surface 52 of the arm 32 interacting with the extension 54 of the cam 38. In particular, the top edge 68 of the groove 66 of the arm 32 abuts the top face 60 of the extension 54 of the cam 38 to urge the cam 38 to move from the first position to the second position as the shift lever 20 pivots in the first direction in the first mode.

Pivoting of the shift lever 20 in the first direction is broadly contemplated to include linear movement of the shift lever 20 from the front of the vehicle to the rear of the vehicle. For example, the shift lever 20 pivots in the first direction as the shift lever 20 moves from the park position to the reverse position. However, the shift lever 20 may move in the first direction according to any other path or direction not specifically described herein without departing from the scope of the present invention.

In the embodiment in FIGS. 1-5, the bottom face 58 of the extension 54 abuts the bottom edge 70 of the cam 38 urging the cam 38 to move from the second position to the first position as the shift lever 20 pivots in a second direction in the first mode. Similarly, in the embodiment in FIGS. 7-9, the bottom edge 70 of the groove 66 of the arm 32 abuts the bottom face 58 of the extension 54 of the cam 38 urging the cam 38 to move from the second position to the first position as the shift lever 20 pivots in the second direction in the first mode. In either embodiment, engagement between the first engagement surface 52 of the arm 32 and the cam 38 occurs as the shift lever 20 pivots in the first mode.

Pivoting of the shift lever 20 in the second direction is broadly contemplated to include linear movement of the shift lever 20 opposite the first direction, i.e., from the rear of the vehicle to the front of the vehicle. For instance, the shift lever 20 pivots in the second direction as the shift lever 20 moves from the reverse position to the park position. However, the shift lever 20 may move in the second direction according to any other path or direction not specifically described herein without departing from the scope of the present invention.

As the cam 3 8 pivots between the first position and the second position, the control cable 12 moves in response to the cam 38 which in turn provides mechanical actuation to the transmission. For the embodiment in FIGS. 1-5, the cam 38 is shown in the first position in FIG. 1 and in the second position in FIGS. 3-5. For the embodiment in FIGS. 7-9, the cam 38 is shown in the first position in FIG. 7 and in the second position in FIGS. 8 and 9. Accordingly, interaction between the shift lever 20, the arm 32, and the cam 38 demonstrates that the shifter assembly 10 provides mechanical actuation to the transmission by movement of the control cable 12 as the shift lever 20 pivots in the first mode. It is to be appreciated that no single position of the shift lever 20, e.g., park, reverse, etc., is restricted exclusively to either the first mode or second mode. In other words, a position of the shift lever 20 may be part of the first mode during which the shifter assembly 10 is providing mechanical actuation, as well as the second mode during which the shifter assembly 10 is providing electronic actuation.

As mentioned above, the arm 32 pivots about the first axis 22 concurrently while the cam 38 pivots about the second axis 40. In particular, as demonstrated by the embodiment in FIGS. 1-5, the arm 32 may rotate about the first axis 22 in a first direction and the cam 38 may rotate about the second axis 40 in a second direction opposite the first direction as the first engagement surface 52 of the arm 32 urges the cam 38 to move between the first and second positions. For example, the first direction of the arm 32 may be clockwise and the second direction of the cam 38 may be counterclockwise, and vice-versa, relative to the orientation to the Figures. Alternatively, as demonstrated by the embodiment in FIGS. 7-9, the arm 32 may rotate about the first axis 22 in a first direction and the cam 38 may rotate about the second axis 40 in the same first direction as the first engagement surface 52 of the arm 32 urges the cam 38 to move between the first and second positions. For example, the first and second directions of the arm 32 and the cam 38, respectively, may both be clockwise or counterclockwise.

As mentioned above, the second engagement surface 62 of the arm 32 abuts the cam 38 as the shift lever 20 pivots in the second mode such that the arm 32 pivots about the first axis 22 while the cam 38 remains stationary. Specifically, in the embodiment in FIGS. 1-5, the front face 56 of the extension 54 abuts the front edge 72 of the cam 38 as the shift lever 20 pivots in the second mode such that the arm 32 pivots about the first axis 22 while the cam 38 remains stationary. In particular, the front face 56 of the extension 54 abuts the front edge 72 of the cam 38 at a first point of contact. Additionally, the cam 38 includes a second profile 74 disposed adjacent the bottom edge 70 of the cam 38. The second profile 74 generally faces the arm 32 and has an arcuate configuration corresponding to the arcuate configuration of the first profile 64 of the arm 32. The first profile 64 of the arm 32 abuts the second profile 74 of the cam 38 as the shift lever 20 pivots in the second mode such that the arm 32 pivots about the first axis 22 while the cam 38 remains stationary. Specifically, the first profile 64 of the arm 32 abuts the second profile 74 of the cam 3 8 at a second point of contact. Thus, as the shift lever 20 pivots in the second mode, the cam 38 is prevented from effectively pivoting as a result of the arm 32 abutting the cam 38 at the first and second points of contact.

In the embodiment in FIGS. 7-9, the first profile 64 of the arm 32 abuts the front face 56 of the extension 54 of the cam 38 as the shift lever 20 pivots in the second mode such that the arm 32 pivots about the first axis 22 while the cam 38 remains stationary. In particular, the front face 56 of the extension 54 abuts the first profile 64 of the arm 32 at a first point of contact. The first profile 64 of the arm 32 generally faces the cam 38 and has an arcuate configuration corresponding to the arcuate configuration of the front face 56 of the extension 54 of the cam 38. Furthermore, the first profile 64 of the arm 32 abuts the cam 38 at a second point of contact. Specifically, as shown in FIGS. 7-9, the first profile 64 of the arm 32 is elongated and extends adjacent a second profile 74 of the cam 38. For simplicity, the second profile 74 of the cam 38 is defined consistently between the embodiment in FIGS. 1-5 and the embodiment in FIGS. 7-9. The projection 35b of the arm 32 extends from the first profile 54 of the arm 32. The projection 35b of the arm 32 abuts the second profile 74 of the cam 38 at the second point of contact as the shift lever 20 pivots in the second mode such that the arm 32 pivots about the first axis 22 while the cam 38 remains stationary. In this embodiment, the second point of contact may vary depending upon the position of the projection 35b in the guide channel 35a as the shift lever 20 pivots in the second mode. Accordingly, as the shift lever 20 pivots in the second mode, the cam 38 is prevented from effectively pivoting as a result of the arm 32 abutting the cam 38 at the first and second points of contact.

As described earlier, as the shift lever 20 pivots in the second mode, the arm 32 pivots about the first axis 22 while the cam 38 remains stationary. As shown in the embodiment in FIGS. 3-5, and/or the embodiment in FIGS. 8 and 9, the second engagement surface 62 of the arm 32 abuts the cam 38 to prevent the cam 38 from pivoting in the second mode. As such, the control cable 12 coupled to the cam 38 remains stationary because the cam 38 remains stationary. Therefore, the arm 32 prevents the cam 38 from inadvertently moving out of place. In turn, the control cable 12 is prevented from shifting and creating the pushing or pulling force to actuate the transmission without the knowledge of the driver of the vehicle.

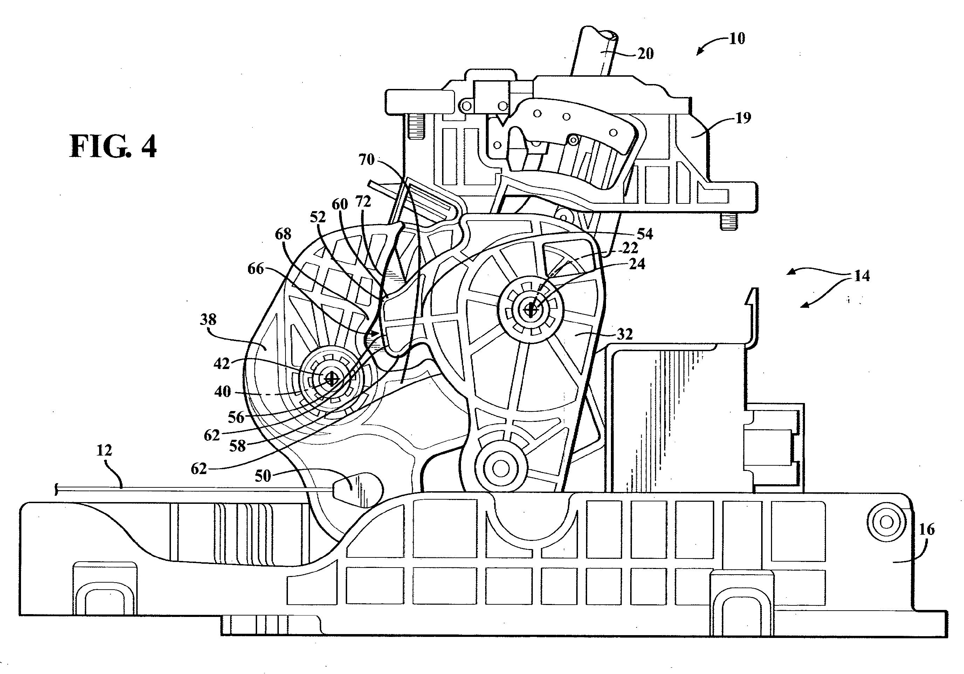

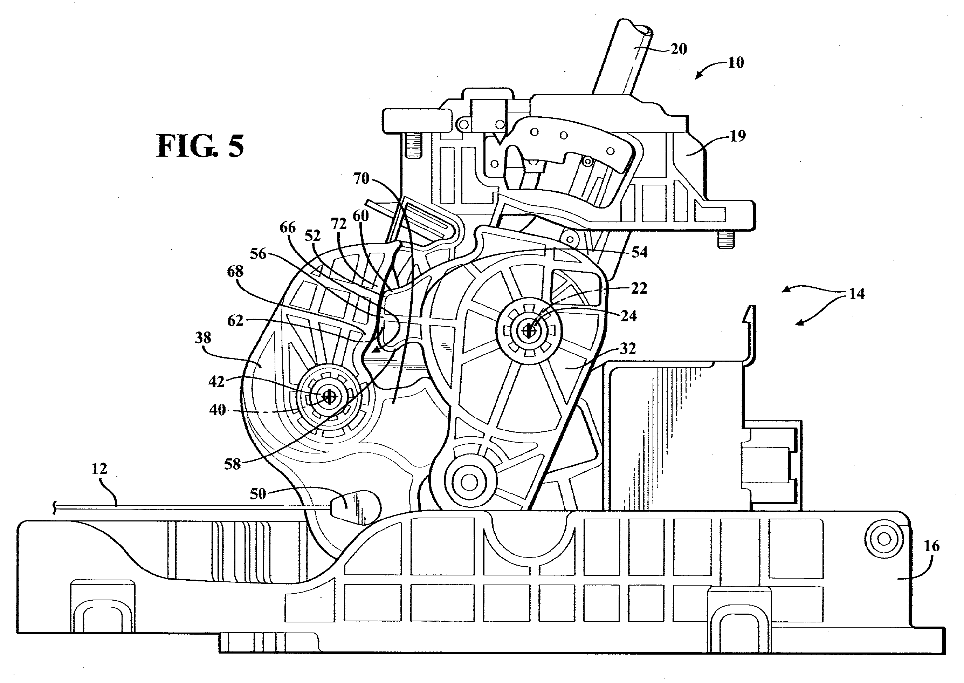

The shifter assembly 10 is generally shown with the shift lever 20 in the second mode in FIGS. 3-5, and 8-9. Specifically, in FIG. 4 the shift lever 20 is in a neutral "N" position, and in FIG. 5 the shift lever 20 is in a drive "D" position. In FIGS. 3-5, the second engagement surface 62 of the arm 32, i.e., the front face 56 of the extension 54 and the first profile 64, simultaneously and continuously abut the cam 38 in the second mode. However, it is to be appreciated that the cam 38 may move slightly relative to the second engagement surface 62 so long as the control cable 12 does not provide any meaningful actuation to the transmission. Said differently, the second engagement surface 62 of the arm 32 need not simultaneously and continuously abut the cam 38 at the two points of contact in the second mode. For instance, in FIG. 8, the second engagement surface 62 of the arm 32, i.e., the first profile 64, may abut the cam 38 only at one of the two points of contact at any given moment in the second mode. Nevertheless, the cam 38 can move only slightly relative to the second engagement surface 62 and is still prevented from effectively pivoting when in the second mode so as to prevent any mechanical actuation to the transmission.

In the embodiment in FIGS. 1 and 3, the front face 56 of the extension 54 has an arcuate configuration and defines a first radius of curvature having a center at the first axis 22. In addition, the front edge 72 of the cam 38 has an arcuate configuration corresponding to the arcuate configuration of the front face 56. The arcuate front edge 72 aligns with the first radius of curvature of the arcuate front face 56 when in the second mode. In other words, in the second mode, the cam 38 is in the second position and the front edge 72 of the cam 38 is positioned such that the front edge 72 aligns to the first radius of curvature. The arcuate front face 56 engages the arcuate front edge 72 to prevent movement of the cam 38 in a first direction. From the perspective as shown in FIGS. 1 and 3, the first direction of the cam 38 is a clockwise direction and the arcuate front face 56 prevents the cam 38 from pivoting in the clockwise direction in the second mode.

In the embodiment in FIGS. 7-9, the first profile 64 of the arm 32 has an arcuate configuration and defines a first radius of curvature having a center at the first axis 22. In addition, the front face 56 of the extension 54 of the cam 38 has an arcuate configuration corresponding to the arcuate configuration of the first profile 64. The arcuate front face 56 aligns with the first radius of curvature of the arcuate first profile 64 when in the second mode. In other words, in the second mode, the cam 38 is in the second position and the front face 56 of the extension 54 of the cam 38 is positioned such that the front face 56 aligns to the first radius of curvature. The arcuate first profile 64 engages the arcuate front face 56 to prevent movement of the cam 38 in a first direction. From the perspective as shown in FIGS. 8-9, the first direction of the cam 38 is a counter-clockwise direction and the arcuate first profile 64 prevents the cam 38 from pivoting in the counter-clockwise direction in the second mode.

Additionally, in the embodiment in FIGS. 1 and 3, the first profile 64 of the arm 32 has an arcuate configuration and defines a second radius of curvature having a center at the first axis 22. Likewise, the second profile 74 of the cam 38 has an arcuate configuration corresponding to the arcuate configuration of the first profile 64. The arcuate second profile 74 aligns with the second radius of curvature of the arcuate first profile 64 when in the second mode. In other words, in the second mode, the cam 38 is in the second position and the second profile 74 is positioned such that the arcuate second profile 74 aligns to the second radius of curvature. As such, the arcuate first profile 64 and the arcuate second profile 74 align with the second radius of curvature in the second mode. The arcuate first profile 64 engages the arcuate second profile 74 to prevent movement of the cam 38 in a second direction opposite the first direction. From the perspective as shown in FIGS. 1 and 3, the second direction of the cam 38 is a counterclockwise direction and the arcuate first profile 64 prevents the cam 38 from pivoting in the counterclockwise direction in the second mode.

In the embodiment in FIGS. 1 and 3, the arcuate front face 56 of the extension 54 engages the arcuate front edge 72 of the cam 38 to prevent movement of the cam 38 in the first direction simultaneously while the arcuate first profile 64 of the arm 32 engages the arcuate second profile 74 of the cam 38 to prevent movement of the cam 38 in the second direction. As such, the cam 38 is prevented from effectively pivoting between the first and second positions for preventing movement of the control cable 12 while the arm 32 pivots about the first axis 22. In other words, in the second mode, the front face 56 of the extension 54 and the front edge 72 of the cam 38 align with the first radius of curvature, and the arcuate first profile 64 and arcuate second profile 74 align with the second radius of curvature. As such, the arm 32 prevents the cam 38 from effectively pivoting to provide mechanical actuation by preventing movement of the control cable 12 because the front face 56 of the extension 54 abuts the front edge 72 of the cam 3 8 simultaneously while the first profile 64 of the arm 32 abuts the second profile 74 of the cam 38. In turn, the arm 32 prevents the cam 38 from effectively pivoting to provide mechanical actuation while simultaneously pivoting about the first axis 22 in the second mode without interfering with the cam 38. Specifically, the second engagement surface 62 of the arm 32 is able clear the groove 66 of the cam 38 such that the arm 32 pivots about the first axis 22 while the cam 38 remains stationary.

In the embodiment in FIGS. 7-9, the arcuate first profile 64 of the arm 32 engages the arcuate front face 56 of extension 54 of the cam 38 to prevent movement of the cam 38 in the first direction simultaneously while the arcuate first profile 64 of the arm 32 engages the second profile 74 of the cam 38 to prevent movement of the cam 38 in the second direction. More specifically, the projection 35b extending from the arcuate first profile 64 engages the second profile 74 of the cam 38 to prevent movement of the cam 38 in the second direction. As such, the cam 38 is prevented from effectively pivoting between the first and second positions for preventing movement of the control cable 12 while the arm 32 pivots about the first axis 22. In other words, in the second mode, the arcuate first profile 64 of the arm 32 and the arcuate front face 56 of extension 54 of the cam 38 align with the first radius of curvature. The arm 32 prevents the cam 38 from effectively pivoting because the arcuate first profile 64 of the arm 32 and the projection 35b trap the cam 38 by abutting the arcuate front face 56 of extension 54 of the cam 38 and the second profile 74 of the cam 38, respectively.

In either embodiment, the arm 32 prevents the cam 38 from effectively pivoting to provide mechanical actuation while simultaneously being able to pivot about the first axis 22 in the second mode without interfering with the cam 38. That is, the second engagement surface 62 of the arm 32 is able clear the cam 38 such that the arm 32 pivots about the first axis 22 while the cam 38 remains stationary. Specifically, in the embodiment in FIG. 3, the arcuate front face 56 of the extension 54 of the arm 32 and the arcuate first profile 64 of the arm 32 are able clear the groove 66 of the cam 38. Similarly, in the embodiment in FIGS. 8-9, the arcuate first profile 56 of the arm 32 is able to clear the arcuate front face 56 of the extension 54 of the cam 38.

The present invention may have any suitable geometry for accomplishing goal of allowing the arm 32 to prevent the cam 38 from pivoting while being able to pivot without interfering with the cam 38. For example, the first axis 22 and the second axis 40 may be laterally and/or vertically spaced from one another according to predetermined distances. Furthermore, the arm 32 and/or cam 38 may extend according to predetermined lengths from the first and second axes 22, 40, respectively. Additionally, components of the arm 32 and the cam 38 may have any suitable configuration such that the arm 32 and the cam 38 follow various radii of curvature for accomplishing the aforementioned goal according to the present invention.

Again, it is to be appreciated that although the second engagement surface 62 clears the cam 38 as the shift lever 20 pivots in the second mode, the second engagement surface 62 will still abut the cam 38 so as to prevent the cam 38 from pivoting about the second axis 40 as the shift lever 20 pivots in the second mode. Furthermore, it is to be appreciated that the second engagement surface 62 of the arm 32 may clear the cam 38 according to any suitable manner. For instance, the arm 32 may clear the cam 38 according to any suitable linear, curved, or curvilinear path.

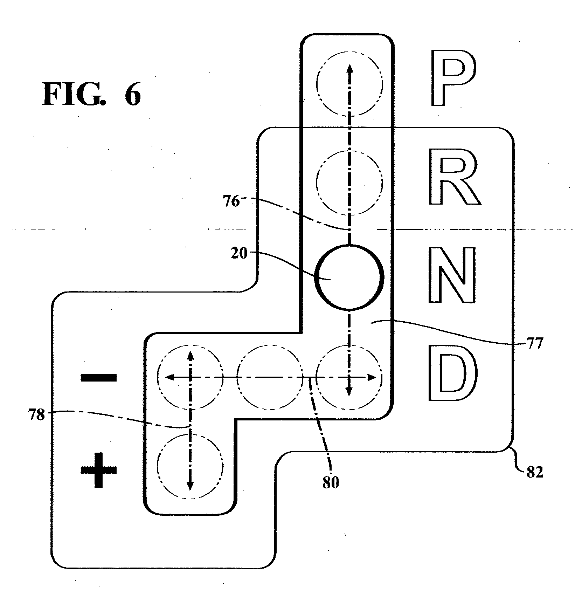

As shown in FIG. 6, the shifter assembly 10 further includes a first shift path 76. Generally, the cover 19 of the housing defines a gate 77 with the shift lever 20 disposed through the gate 77. The shift lever 20 is moveable along the first shift path 76 such that first shift path 76 generally accommodates movement of the shift lever 20. The first shift path 76 includes at least the park position "P", the reverse position "R", the neutral position "N", and the drive position "D." It is to be appreciated that the first shift path 76 may include other positions, such as, a first low position "L1," a second low position "L2", an overdrive position "OD", and the like. As the shift lever 20 pivots in the first mode, mechanical actuation of the transmission occurs in the first shift path 76. Specifically, the shift lever 20 is pivotable in the first mode between the park position and at least one other position. For instance, the shifter assembly 10 may provide mechanical actuation to the transmission as the shift lever 20 pivots between the park position and the reverse position. In addition, the shifter assembly 10 may, for example, provide mechanical actuation to the transmission when the shift lever 20 pivots between more than two positions. For example, mechanical actuation may be provided as the shift lever 20 pivots between the park position and the reverse position, as well as between the reverse position and the neutral position.

The shifter assembly 10 is particularly advantageous in embodiments whereby the shifter assembly 10 exclusively provides electronic actuation to the transmission except as the shift lever 20 pivots in/out of the park position to provide mechanical actuation. Mainly, in the event of power loss to the vehicle, electronic actuation of the transmission is unavailable. However, because the shifter assembly 10 may provide mechanical actuation to the transmission independent of electronic actuation, the shifter assembly 10 is still capable of providing mechanical actuation to the transmission during power loss. Specifically, if the transmission of the vehicle is in the park position and the vehicle must be towed during a power loss, the transmission may be mechanically actuated to allow release of the vehicle from the park position such that the vehicle may become mobile. Additionally, it is particularly important that the shifter assembly 10 reliably actuate the transmission in/out of the park position. Although electronic actuation enables the shifter assembly 10 to be built using less components, mechanical actuation tends to be more reliable than electronic actuation to the transmission. It is to be appreciated that the shifter assembly 10 will likely be in the park position a majority of the time. However, the vehicle is most often left unattended in the park position. Therefore, if an unattended vehicle were to lose power while the shifter assembly 10 is in the park position, there is a possibility that the unattended vehicle may roll without a driver present. Similarly, if the vehicle were to lose power while the shifter assembly 10 is in a position other than park, such as a neutral position, the shifter assembly 10 would not be able to actuate the transmission of the vehicle into park. As such, by providing mechanical actuation in/out of the park position, with all other positions being electronically actuated, the shifter assembly 10 can be built with less components, yet still provide the reliability required in critical circumstances, such as actuating the transmission in/out of the park position.

Additionally, as the shift lever 20 pivots in the second mode, electronic actuation of the transmission occurs in the first shift path 76. Specifically, the shift lever 20 is pivotable in the second mode between the reverse position and at least one other position. For instance, the shifter assembly 10 may provide electronic actuation to the transmission as the shift lever 20 pivots between the reverse position and the neutral position. In addition, the shifter assembly 10 may, for example, provide electronic actuation to the transmission as the shift lever 20 is pivoted between more than two positions. For example, electronic actuation may be provided as the shift lever 20 pivots from the reverse position to the neutral position, as well as between the neutral position to the drive position.

The shifter assembly 10 further includes a second shift path 78 being generally parallel to the first shift path 76. The shift lever 20 is movable between the first shift path 76 and the second shift path 78 across a third shift path 80 being transverse to the first and second shift paths 76, 78. The third shift path 80 connects the first and second shift paths 76, 78. Specifically, the shift lever 20 is moveable from the first shift path 76 through the third shift path 80 from the drive position. However, it is to be appreciated that the shift lever 20 may be moveable from the first shift path 76 through the third shift path 80 from any suitable position. It is also to be appreciated that as the shift lever 20 pivots in the first mode, mechanical actuation of the transmission may occur in the first, second and/or the third shift paths 76, 78, 80. In addition, as the shift lever 20 pivots in the second mode, electronic actuation of the transmission may occur in the first, second and/or the third shift paths 76, 78, 80. In FIG. 6, a region 82 defines where the shift lever 20 is in the second mode with respect to the first, second, and third shift paths 76, 78, 80. The region 82 is an imaginary reference area merely provided to illustrate the second mode and is not intended to limit the second mode to the region 82.

The shift lever 20 and the arm 32 may become disengaged such that the shift lever 20 moves independently of the arm 32 as the shift lever 20 moves in the second and third shift paths 78, 80. In the embodiment in FIG. 2, the shift lever 20 may be pivotable about a pivot pin 84 for allowing the shift lever 20 to pivot across the third shift path 80. The pivot pin 84 is disposed transverse to the first axis 22 to allow the shift lever 20 to pivot transversely with respect to the first shift path 76 and towards the second shift path 78. As the shift lever 20 pivots about the pivot pin 84 across the third shift path 80, the shift lever 20 disengages the catch 36. In turn, the arm 32 and the shift lever 20 no longer concurrently pivot about the first axis 22. As a result, the shift lever 20 moves independently of the arm 32. Similarly, in the embodiment in FIGS. 7-9, the shift lever 20 pivots with respect to the ball 29 for allowing the shift lever 20 to pivot across the third shift path 80. Thereafter, the shift lever 20 may disengage the arm 32 according to any suitable method, including the method demonstrated by the embodiment in FIG. 2.

It is to be appreciated that the shift lever 20 and the arm 32 may remain engaged throughout operation of the shifter assembly 10 in the first and/or second modes. Furthermore, the shift lever 20 and the arm 32 may remain engaged throughout operation of the shifter assembly 10 in the first, second, and/or third shift paths 76, 78, 80.

The second shift path 78 includes a manumatic mode with the shifter assembly 10 electronically actuating the transmission as the shift lever 20 pivots in the manumatic mode. The manumatic mode generally has an up-shift "+" position and a down-shift "-" position. The manumatic mode allows the transmission to be shifted up or down one gear lever by moving the shift lever 20 incrementally towards the up-shift position or the down-shift position, respectively.

As mentioned above, the transmission is electronically actuated as the shift lever 20 pivots in the second mode. In one embodiment, a relative position of the shift lever 20 may be sensed by a PCB subassembly 86 coupled to the housing 14. In particular, a magnet 88 may be coupled to the shift lever 20 and may move in relation to movement of the shift lever 20 about the first axis 22. The PCB subassembly 86 electromagnetically senses movement of the magnet 88 as the shift lever 20 pivots. The PCB subassembly 86 generates an electronic signal corresponding to the relative position of the shift lever 20 and sends the electronic signal to a control unit. The control unit receives and processes the electronic signal to command the transmission to actuate into a gear position corresponding to the relative position of the shifter lever 20 sensed by the PCB subassembly 86. However, it is to be understood that the relative position of the shift lever 20 may be sensed according to any other suitable electronic sensing system without departing from the scope of the present invention.

The present invention further provides a method of operating the shifter assembly 10. As described above, the shifter assembly 10 has the shift lever 20 and the arm 32 disposed about the first axis 22. The arm 32 has the first engagement surface 52 and the second engagement surface 62. The cam 38 is disposed about the second axis 40 spaced from the first axis 22.

The method includes the step of concurrently pivoting the shift lever 20 and the arm 32 about the first axis 22 in the first mode to provide mechanical actuation to the transmission. Specifically, the shift lever 20 and the arm 32 are engaged. In one embodiment, the shift lever 20 selectively engages the catch 36 of the arm 32 by entering the gap 39 defined by the catch 36. Once the shift lever 20 and the arm 32 are engaged, the shift lever 20 and the arm 32 pivot concurrently about the first axis 22 in the first mode to provide mechanical actuation to the transmission. For instance, engagement between the catch 36 of the arm 32 and the shift lever 20 forces the arm 32 to pivot concurrently with the shift lever 20 in response to movement of the shift lever 20 in the first mode.

The method further includes the step of engaging the first engagement surface 52 of the arm 32 with the cam 38 to simultaneously rotate the cam 38 about the second axis 40 concurrently with the arm 32 pivoting in the first mode. Specifically, the arm 32 rotates about the first axis 22 in the first direction and the cam 38 rotates about the second axis 40 in the second direction as the first engagement surface 52 of the arm 32 engages the cam 38. As the cam 38 rotates about the second axis 40, the cam 38 will move between the first position and the second position. The control cable 12 coupled to the cam 38 will shift in response to movement of the cam 38 between the first and second positions. In turn, the control cable 12 will create the pushing or pulling force to mechanically actuate the transmission.

The method further includes the step of pivoting the shift lever 20 about the first axis 22 in the second mode to provide electronic actuation to the transmission. In one instance, the shift lever 20 and the arm 32 are disengaged and the shift lever 20 moves independently of the arm 32 as the shift lever 20 pivots in the second mode. As such, only the shift lever 20 is pivoted about the first axis 22 in the second mode while the arm 32 remains stationary. Alternatively, both the shift lever 20 and the arm 32 pivot concurrently about the first axis 22 in the second mode. The arm 32 is separated from the cam 38 such that the arm 32 rotates about the first axis 22 independently of the cam 38 as the shift lever 20 pivots in at least the second mode.

The method further includes the step of abutting the second engagement surface 62 of the arm 32 against the cam 38 to prevent movement of the cam 38 during pivoting of the shift lever 20 in the second mode. In one embodiment, the shift lever 20 pivots while the arm 32 and the cam 38 remain stationary with the arm 32 abutting the cam 38 to prevent movement of the cam 38. In another embodiment, both the arm 32 and the shift lever 20 may concurrently pivot about the first axis 22 in the second mode while the cam 38 remains stationary. If the arm 32 pivots about the first axis 22 in the second mode, the second engagement surface 62 of the arm 32 is able clear the cam 38 such that the arm 32 pivots about the first axis 22 while the cam 38 remains stationary.

The many features and advantages of the invention are apparent from the detailed specification, and thus, it is intended by the appended claims to cover all such features and advantages of the invention which fall within the scope of the invention. Further, since numerous modifications and variations will readily occur to those skilled in the art, it is not desired to limit the invention to the exact construction and operation illustrated and described, and accordingly, all suitable modifications and equivalents may be resorted to, falling within the scope of the invention.

## Claims

1. A shifter assembly (10) for providing mechanical actuation to a transmission of a vehicle by movement of a control cable (12) and for providing electronic actuation to the transmission of the vehicle, said shifter assembly (10) comprising:
a housing (14);
a shift lever (20) coupled to said housing (14) and pivotable about a first axis (22) in a first mode for providing mechanical actuation to the transmission, and a second mode for providing electronic actuation to the transmission;
an arm (32) coupled to said housing (14) and pivotable about said first axis (22) concurrently with said shift lever (20) in at least said first mode and said arm (32) including a first engagement surface (52) and a second engagement surface (62); and
a cam (38) coupled to said housing (14) and pivotable about a second axis (40) spaced from said first axis (22) between a first position and a second position for moving the control cable (12) to mechanically actuate the transmission;
**characterized by** said first engagement surface (52) of said arm (32) urging said cam (38) to move between said first and second positions as said shift lever (20) pivots in said first mode such that said arm (32) pivots about said first axis (22) concurrently with said cam (38) pivoting about said second axis (40) for moving the control cable (12) and providing mechanical actuation to the transmission and said second engagement surface (62) of said arm (32) abutting said cam (38) as said shift lever (20) pivots in said second mode such that said arm (32) pivots about said first axis (22) while said cam (38) remains stationary.

2. The shifter assembly (10) of claim 1 wherein one of said arm (32) and said cam (38) defines a groove (66) and the other one of said arm (32) and said cam (3 8) includes an extension (54) adapted to engage said groove (66).

3. The shifter assembly (10) of claim 2 wherein said first engagement surface (52) is defined by one of said extension (54) of said arm and said groove (66) of said arm (32).

4. The shifter assembly (10) of any one of claims 2-3 wherein said arm (32) defines a first profile (64) disposed adjacent one of said extension (54) of said arm (32) and said groove (66) of said arm (32) with said first profile (64) defining said second engagement surface (62).

5. The shifter assembly (10) of claim 4 wherein said first profile (64) of said arm (32) has an arcuate configuration and defines a radius of curvature having a center at said first axis (22) and said cam (38) has an arcuate configuration corresponding to said arcuate configuration of said first profile (64) of said arm (32) with said arcuate configuration of said cam (38) aligning with said radius of curvature of said arcuate first profile (64) of said arm (32) in said second mode.

6. The shifter assembly (10) of any one of claims 4-5 wherein said arm (32) abuts said cam (38) to prevent movement of said cam (38) in a first direction and said arm (32) abuts said cam (38) to prevent movement of said cam (38) in a second direction as said shift lever (20) pivots in said second mode.

7. The shifter assembly (10) of any one of claims 4-6 wherein said arm (32) includes a projection (35b) extending from said first profile (64) of said arm (32) with said projection (35b) engaging said cam (38) to prevent movement of said cam (38) in said first direction.

8. The shifter assembly (10) of any one of claims 4-7 wherein said arm (32) includes said extension (54) and said cam (38) defines said groove (66) with said extension (54) of said arm (32) abutting said groove (66) of said cam (38) urging said cam (38) to move from said first position to said second position as said shift lever (20) pivots in a first direction in said first mode, and urging said cam (38) to move from said second position to said first position as said shift lever (20) pivots in a second direction in said first mode.

9. The shifter assembly (10) of any one of claims 4-8 wherein said extension (54) of said arm (32) includes a top face (60), a bottom face (58), and a front face (56) disposed between said top face (60) and said bottom face (58), with said top face (60) and said bottom face (58) of said extension (54) further defining said first engagement surface (52).

10. The shifter assembly (10) of claim 9 wherein said front face (56) of said extension (54) of said arm (32) has an arcuate configuration and defines a first radius of curvature having a center at said first axis (22) and said cam (38) has a front edge (72) with said front edge (72) of said cam (38) having an arcuate configuration corresponding to said arcuate configuration of said front face (56) of said extension (54) with said arcuate front edge (72) aligning with said first radius of curvature of said arcuate front face (56) when in said second mode, and said arcuate front face (56) engaging said arcuate front edge (72) to prevent movement of said cam (38) in said first direction.

11. The shifter assembly (10) of claim 10 wherein said first profile (64) of said arm (32) has an arcuate configuration and defines a second radius of curvature having a center at said first axis (22) and said cam (38) has a second profile (74) with said second profile (74) of said cam (38) having an arcuate configuration corresponding to said arcuate configuration of said first profile (64) of said arm (32) with said arcuate second profile (74) aligning with said second radius of curvature of said arcuate first profile (64) when in said second mode, and said arcuate first profile (64) engaging said arcuate second profile (74) to prevent movement of said cam (38) in said second direction.

12. The shifter assembly (10) of any one of claims 2-7 wherein said arm (32) includes said groove (66) and said cam (38) defines said extension (54) with said groove (66) of said arm (32) abutting said extension (54) of said cam (38) urging said cam (38) to move from said first position to said second position as said shift lever (20) pivots in a first direction in said first mode, and urging said cam (38) to move from said second position to said first position as said shift lever (20) pivots in a second direction in said first mode.

13. The shifter assembly (10) of any one of claims 2-7, and 12 wherein said groove (66) of said arm (32) is defined by a top edge (68) and bottom edge (70) with said top edge (68) and said bottom edge (70) of said groove (66) of said arm (32) defining said first engagement surface (52).

14. The shifter assembly (10) of any preceding claim further including a first shift path (76) and a second shift path (78) being generally parallel to said first shift path (76) and said shift lever (20) being moveable between said first shift path (76) and said second shift path (78) across a third shift path (80) being transverse to said first shift path (76) and said second shift path (78) wherein said shift lever (20) and said arm (32) are disengaged and said shift lever (20) moves independently of said arm (32) as said shift lever (20) pivots in said second shift path (78) and said third shift path (80).

15. A method of operating a shifter assembly (10) having a shift lever (20) and an arm (32) disposed about a first axis (22) with the arm (32) having a first engagement surface (52) and a second engagement surface (62), and a cam (38) disposed about a second axis (40) spaced from the first axis (22), said method comprising the steps of:
concurrently pivoting the shift lever (20) and the arm (32) about the first axis (22) in a first mode to provide mechanical actuation to a transmission;
engaging the first engagement surface (52) of the arm (32) with the cam (38) to simultaneously rotate the cam (38) about the second axis (40) concurrently with the arm (32) pivoting in the first mode;
pivoting the shift lever (20) about the first axis (22) in a second mode to provide electronic actuation to the transmission; and
abutting the second engagement surface (62) of the arm (32) against the cam (38) to prevent movement of the cam (38) during pivoting of the shift lever (20) in the second mode.

16. A method as set forth in claim 15 wherein the arm (32) rotates about the first axis (22) in a first direction and the cam (38) rotates about the second axis (40) in a second direction opposite the first direction as the first engagement surface (52) of the arm (32) engages the cam (38).

17. A method as set forth in claim 15 wherein the arm (32) rotates about the first axis (22) in a first direction and the cam (38) rotates about the second axis (40) in a second direction similar to the first direction as the first engagement surface (52) of the arm (32) engages the cam (38).

18. A method as set forth in any one of claims 15-17 wherein the arm (32) is separated from the cam (38) such that the arm (32) rotates about the first axis (22) independently of the cam (38) as the shift lever (20) pivots in at least the second mode.

19. A method as set forth in any one of claims 15-18 wherein the shift lever (20) and the arm (32) pivot concurrently about the first axis (22) in the second mode.

20. A method as set forth in any one of claims 15-18 wherein the shift lever (20) and the arm (32) are disengaged and the shift lever (20) moves independently of the arm (32) as the shift lever (20) pivots in the second mode.

## Patentansprüche

1. Schaltanordnung (10) zum Bereitstellen mechanischer Betätigung für ein Getriebe eines Fahrzeugs, indem ein Steuerseilzug (12) bewegt wird, und zum Bereitstellen elektrischer Betätigung für das Getriebe des Fahrzeugs, wobei die Schaltanordnung (10) aufweist:
ein Gehäuse (14),
einen Schalthebel (20), der mit dem Gehäuse (14) gekoppelt ist und um eine erste Achse (22) in einem ersten Modus zum Bereitstellen mechanischer Betätigung für das Getriebe und in einem zweiten Modus zum Bereitstellen elektronischer Betätigung für das Getriebe schwenkbar ist,
einen Arm (32), der mit dem Gehäuse (14) gekoppelt ist und um die erste Achse (22) gleichzeitig mit dem Schalthebel (20) wenigstens in dem ersten Modus schwenkbar ist, und wobei der Arm (32) eine erste Führungsoberfläche (52) und eine zweite Führungsoberfläche (62) aufweist, und
einen Nocken (38), der mit dem Gehäuse gekoppelt ist und um eine von der ersten Achse (22) beabstandete zweite Achse (40) zwischen einer ersten Position und einer zweiten Position schwenkbar ist, um den Steuerseilzug (12) zu bewegen, um das Getriebe mechanisch zu betätigen,
**dadurch gekennzeichnet, dass** die erste Führungsoberfläche (52) des Arms (32) den Nocken (38) dazu veranlasst, sich zwischen den ersten und zweiten Positionen zu bewegen, wenn der Schalthebel (20) in dem ersten Modus schwenkt, so dass der Arm (32) um die erste Achse (22) gleichzeitig mit dem Schwenken es Nockens (38) um die zweite Achse (40) schwenkt, um den Steuerseilzug (12) zu bewegen und mechanische Betätigung für das Getriebe bereitzustellen, und dass die zweite Führungsoberfläche (62) des Arms (32) an dem Nocken (38) anliegt, wenn der Schalthebel (20) in dem zweiten Modus schwenkt, so dass der Arm (32) um die erste Achse (22) schwenkt, während der Nocken (38) ortsfest bleibt.

2. Schaltanordnung (10) nach Anspruch 1, wobei einer von dem Arm (32) und dem Nocken (38) eine Nut (66) definiert und der andere von dem Arm (32) und dem Nocken (38) einen Fortsatz (54) aufweist, der dazu ausgestaltet ist, um in die Nut (66) einzugreifen.

3. Schaltanordnung (10) nach Anspruch 2, wobei die erste Führungsoberfläche (52) durch einen von dem Fortsatz (54) des Arms und der Nut (66) des Arms (32) definiert ist.

4. Schaltanordnung (10) nach einem der Ansprüche 2 - 3, wobei der Arm (32) ein erstes Profil (64) definiert, das benachbart zu einem von dem Fortsatz (54) des Arms (32) und der Nut (66) des Arms (32) angeordnet ist, wobei das erste Profil (64) die zweite Führungsoberfläche (62) definiert.

5. Schaltanordnung nach Anspruch 4, wobei das erste Profil (64) des Arms (32) eine bogenförmige Gestaltung hat und einen Krümmungsradius definiert, dessen Mittelpunkt auf der ersten Achse (22) liegt, und wobei der Nocken (38) eine bogenförmige Gestaltung hat, die der bogenförmigen Gestaltung des ersten Profils (64) des Arms (32) entspricht, wobei die bogenförmige Gestaltung des Nockens (38) sich in dem zweiten Modus mit dem Krümmungsradius des ersten Profils (64) des Arms (32) ausrichtet.

6. Schaltanordnung (10) nach einem der Ansprüche 4 - 5, wobei der Arm (32) an dem Nocken (38) anliegt, um Bewegung des Nockens (38) in einer ersten Richtung zu verhindern, und wobei der Arm (32) an dem Nocken (38) anliegt, um Bewegung des Arms (38) in eine zweite Richtung zu verhindern, wenn der Schalthebel (20) in dem zweiten Modus schenkt.

7. Schaltanordnung (10) nach einem der Ansprüche 4 - 6, wobei der Arm (32) einen Vorsprung (35b) aufweist, der von dem ersten Profil (64) des Arms (32) ausgeht, wobei der Vorsprung (35b) an dem Nocken (38) anliegt, um Bewegung des Nockens (38) in die erste Richtung zu verhindern.

8. Schaltanordnung (10) nach einem der Ansprüche 4 - 7, wobei der Arm (32) den Fortsatz (54) enthält und der Nocken (38) die Nut (66) definiert, wobei der Fortsatz (54) des Arms (32) in der Nut (66) des Nockens (38) anliegt, um den Nocken (38) dazu zu veranlassen, sich aus der ersten Position in die zweite Position zu bewegen, wenn der Schalthebel (20) in dem ersten Modus in einer ersten Richtung schwenkt, und den Nocken (38) dazu zu veranlassen, sich aus der zweiten Position in die erste Position zu bewegen, wenn der Schalthebel (20) in dem ersten Modus in eine zweite Richtung schwenkt.

9. Schaltanordnung (10) nach einem der Ansprüche 4 - 8, wobei der Fortsatz (54) des Arms (32) eine obere Oberfläche (60), eine untere Oberfläche (58) und eine Stirnfläche (56) umfasst, die zwischen der oberen Oberfläche (60) und der unteren Oberfläche (58) angeordnet ist, wobei die obere Oberfläche (60) und die untere Oberfläche (58) des Fortsatzes (54) weiter die erste Führungsoberfläche (52) definieren.

10. Schaltanordnung (10) nach Anspruch 9, wobei die obere Oberfläche (56) des Fortsatzes (54) des Arms (32) eine bogenförmige Gestaltung hat und einen ersten Krümmungsradius definiert, der einen Mittelpunkt auf der ersten Achse (22) hat, und wobei der Nocken (38) eine vordere Kante (72) hat, wobei die vordere Kante (72) des Nockens (38) eine der bogenförmigen Gestaltung der oberen Oberfläche (56) des Fortsatzes (54) entsprechende bogenförmige Gestaltung hat, wobei sich die bogenförmige vordere Kante (72) im Fall des zweiten Modus mit dem ersten Krümmungsradius der bogenförmigen oberen Oberfläche (56) ausrichtet, und wobei die bogenförmige obere Oberfläche (56) an der bogenförmigen vorderen Kante (72) anliegt, um die Bewegung des Nockens (38) in die erste Richtung zu verhindern.

11. Schaltanordnung (10) nach Anspruch 10, wobei das erste Profil (64) des Arms (32) eine bogenförmige Gestaltung hat und einen zweiten Krümmungsradius definiert, der einen Mittelpunkt auf der ersten Achse (22) hat, und wobei der Nocken (38) ein zweites Profil (74) hat, wobei das zweite Profil (74) des Nockens (38) eine der bogenförmige Gestaltung des ersten Profils (64) des ersten Arms (32) entsprechende bogenförmige Gestaltung hat, wobei das bogenförmige zweite Profil (74) sich mit dem zweiten Krümmungsradius des bogenförmigen ersten Profils (64) im Fall des zweiten Modus ausrichtet und wobei das bogenförmige erste Profil (64) an dem bogenförmigen zweiten Profil (74) anliegt, um Bewegung des Nockens (38) in die zweite Richtung zu verhindern.

12. Schaltanordnung (10) nach einem der Ansprüche 2 - 7, wobei der Arm (32) die Nut (66) enthält und der Nocken (38) den Fortsatz (54) definiert, wobei die Nut (66) des Arms (32) an dem Fortsatz (54) des Nockens (38) anliegt, um den Nocken (38) dazu zu veranlassen, sich aus der ersten Position in die zweite Position zu bewegen, wenn der Schalthebel (20) in dem ersten Modus in eine erste Richtung schwenkt, und um den Nocken (38) dazu zu verlassen, sich aus der zweiten Position in die erste Position zu bewegen, wenn der Schalthebel (20) in dem ersten Modus in eine zweite Richtung schwenkt.

13. Schaltanordnung (10) nach einem der Ansprüche 2 - 7 und 12, wobei die Nut (66) des Arms (32) durch eine obere Kante (68) und eine untere Kante (70) definiert ist, wobei die obere Kante (68) und die untere Kante (70) der Nut (66) des Arms (32) die erste Führungsoberfläche (52) definieren.

14. Schaltanordnung (10) nach einem der vorhergehenden Ansprüche, die weiter eine erste Schaltstrecke (76) und eine zweite Schaltstrecke (78), die allgemein parallel zu der ersten Schaltstrecke (76) verläuft, aufweist, und wobei der Schalthebel (20) zwischen der ersten Schaltstrecke (76) und der zweiten Schaltstrecke (78) über eine dritte Schaltstrecke (80) beweglich ist, die quer zu der ersten Schaltstrecke (76) und der zweiten Schaltstrecke (78) verläuft, wobei der Schalthebel (20) und der Arm (32) entkoppelt sind und der Schalthebel (20) sich unabhängig von dem Arm (32) bewegt, wenn der Schalthebel (20) in der zweiten Schaltstrecke (78) und der dritten Schaltstrecke (80) schwenkt.

15. Verfahren zum Betreiben einer Schaltanordnung (10) mit einem Schalthebel (20) und einem Arm (32), die um eine erste Achse (22) angeordnet sind, wobei der Arm (32) eine erste Führungsoberfläche (52) und eine zweite Führungsoberfläche (62) aufweist, und mit einem Nocken (38), der um eine zweite, von der ersten Achse (22) beabstandete Achse (40) angeordnet ist, wobei das Verfahren die Schritte aufweist:
gleichzeitiges Schwenken des Schalthebels (20) und des Arms (32) um die erste Achse (22) in einem ersten Modus, um eine mechanische Betätigung für ein Getriebe bereitzustellen,
Einwirken der ersten Führungsoberfläche (52) des Arms (32) auf den Nocken (38), um gleichzeitig den Nocken (38) um die zweite Achse (40) gleichzeitig mit dem Schwenken des Arms (32) in dem ersten Modus zu schwenken,
Schwenken des Schalthebels (20) um die erste Achse (22) in einem zweiten Modus, um elektronische Betätigung für das Getriebe bereitzustellen, und
Anlegen der zweiten Führungsoberfläche (62) des Arms (32) an den Nocken (38), um während des Schwenkens des Schalthebels (20) in dem zweiten Modus Bewegung des Nockens (38) zu verhindern.

16. Verfahren nach Anspruch 15, wobei der Arm (32) sich um die erste Achse (22) in einer ersten Richtung dreht und der Nocken (38) sich um die zweite Achse (40) in einer zweiten Richtung entgegengesetzt zur ersten Richtung dreht, wenn die erste Führungsoberfläche (52) des Arms (32) auf den Nocken (38) einwirkt.

17. Verfahren nach Anspruch 15, wobei sich der Arm (32) um die erste Achse (22) in einer ersten Richtung und der Nocken (38) sich um die zweite Achse (40) in einer zweiten Richtung ähnlich der ersten Richtung dreht, wenn die ersten Führungsoberfläche (52) des Arms (32) auf den Nocken (38) einwirkt.

18. Verfahren nach einem der Ansprüche 15 - 17, wobei der Arm (32) von dem Nocken (38) getrennt ist, so dass sich der Arm (32) unabhängig von dem Nocken (38) um die erste Achse (22) dreht, wenn der Schalthebel (20) wenigstens in dem zweiten Modus schwenkt.

19. Verfahren nach einem der Ansprüche 15 - 18, wobei der Schalthebel (20) und der Arm (32) in dem zweiten Modus gleichzeitig um die erste Achse (22) schwenken.

20. Verfahren nach einem der Ansprüche 15 - 18, wobei der Schalthebel (20) und der Arm (32) voneinander gelöst sind und sich der Schalthebel (20) unabhängig von dem Arm (32) bewegt, wenn der Schalthebel (20) in dem zweiten Modus schwenkt.

## Revendications

1. Ensemble sélecteur de vitesse (10) servant à fournir une commande mécanique d'une transmission d'un véhicule par mouvement d'un câble de commande (12) et à fournir une commande électronique de la transmission du véhicule, ledit ensemble sélecteur de vitesse (10) comprenant :
un boîtier (14) ;
un levier de sélection de vitesse (20) couplé audit boîtier (14) et pouvant pivoter autour d'un premier axe (22) dans un premier mode de fourniture de commande mécanique de la transmission, et dans un second mode de fourniture de commande électronique de la transmission ;
un bras (32) couplé audit boîtier (14) et pouvant pivoter autour dudit premier axe (22) conjointement avec ledit levier de sélection de vitesse (20) dans au moins ledit premier mode, et ledit bras (32) incluant une première surface de coopération (52) et une seconde surface de coopération (62) ; et
une came (38) couplée audit boîtier (14) et pouvant pivoter autour d'un second axe (40) espacé du premier axe (22) entre une première position et une seconde position afin de bouger le câble de commande (12) de façon à actionner mécaniquement la transmission ;
**caractérisé en ce que** ladite première surface de coopération (52) dudit bras (32) pousse ladite came (38) pour un déplacement entre lesdites première et seconde positions lorsque ledit levier de sélection de vitesse (20) pivote dans ledit premier mode de sorte que ledit bras (32) pivote autour dudit premier axe (22) conjointement avec ladite came (38) pivotant autour dudit second axe (40) pour bouger le câble de commande (12) et fournir une commande mécanique de la transmission, et **en ce que** ladite seconde surface de coopération (62) dudit bras (32) vient en butée contre ladite came (38) lorsque ledit levier de sélection de vitesse (20) pivote dans ledit second mode de sorte que ledit bras (32) pivote autour dudit premier axe (22) tandis que ladite came (38) demeure immobile.

2. Ensemble sélecteur de vitesse (10) selon la revendication 1, dans lequel l'un dudit bras (32) et de ladite came (38) définit une rainure (66) et l'autre dudit bras (32) et de ladite came (38) comprend un prolongement (54) conçu pour coopérer avec ladite rainure (66).

3. Ensemble sélecteur de vitesse (10) selon la revendication 2, dans lequel ladite première surface de coopération (52) est définie par l'un dudit prolongement (54) dudit bras et de ladite rainure (66) dudit bras (32).

4. Ensemble sélecteur de vitesse (10) selon l'une quelconque des revendications 2 ou 3, dans lequel ledit bras (32) définit un premier profil (64) disposé adjacent à l'un dudit prolongement (54) dudit bras (32) et de ladite rainure (66) dudit bras (32), ledit premier profil (64) définissant ladite seconde surface de coopération (62).

5. Ensemble sélecteur de vitesse (10) selon la revendication 4, dans lequel ledit premier profil (64) dudit bras (32) a une configuration arquée et définit un rayon de courbure ayant un centre situé au niveau dudit premier axe (22) et dans lequel ladite came (38) a une configuration arquée correspondant à ladite configuration arquée dudit premier profil (64) dudit bras (32), ladite configuration arquée de ladite came (38) étant alignée avec ledit rayon de courbure dudit premier profil arqué (64) dudit bras (32) dans ledit second mode.

6. Ensemble sélecteur de vitesse (10) selon l'une quelconque des revendications 4 ou 5, dans lequel ledit bras (32) est en butée contre ladite came (38) pour empêcher un mouvement de ladite came (38) dans un premier sens, et dans lequel ledit bras (32) vient en butée contre ladite came (38) pour empêcher un mouvement de ladite came (38) dans un second sens lorsque ledit levier de sélection de vitesse (20) pivote dans ledit second mode.

7. Ensemble sélecteur de vitesse (10) selon l'une quelconque des revendications 4 à 6, dans lequel ledit bras (32) comprend une saillie (35b) s'étendant à partir dudit premier profil (64) dudit bras (32), ladite saillie (35b) coopérant avec ladite came (38) pour empêcher un mouvement de ladite came (38) dans ledit premier sens.

8. Ensemble sélecteur de vitesse (10) selon l'une quelconque des revendications 4 à 7, dans lequel ledit bras (32) comprend ledit prolongement (54) et dans lequel ladite came (38) définit ladite rainure (66), ledit prolongement (54) dudit bras (32) venant en butée contre ladite rainure (66) de ladite came (38) en poussant ladite came (38) de sorte qu'elle passe de ladite première position à ladite seconde position lorsque ledit levier de sélection de vitesse (20) pivote dans un premier sens dans ledit premier mode, et en poussant ladite came (38) de sorte qu'elle passe de ladite seconde position à ladite première position lorsque ledit levier de sélection de vitesse (20) pivote dans un second sens dans ledit premier mode.

9. Ensemble sélecteur de vitesse (10) selon l'une quelconque des revendications 4 à 8, dans lequel ledit prolongement (54) dudit bras (32) comprend une face supérieure (60), une face inférieure (58) et une face avant (56) disposée entre ladite face supérieure (60) et ladite face inférieure (58), ladite face supérieure (60) et ladite face inférieure (58) dudit prolongement (54) définissant en outre ladite première surface de coopération (52).

10. Ensemble sélecteur de vitesse (10) selon la revendication 9, dans lequel ladite face avant (56) dudit prolongement (54) dudit bras (32) a une configuration arquée et définit un premier rayon de courbure ayant un centre situé au niveau dudit premier axe (22) et dans lequel ladite came (38) comporte un bord avant (72), ledit bord avant (72) de ladite came (38) ayant une configuration arquée correspondant à ladite configuration arquée de ladite face avant (56) dudit prolongement (54), ledit bord avant arqué (72) étant aligné avec ledit premier rayon de courbure de ladite face avant arquée (56) lorsqu'il se trouve dans ledit second mode, et ladite face avant arquée (56) coopérant avec ledit bord avant arqué (72) pour empêcher un mouvement de ladite came (38) dans ledit premier sens.

11. Ensemble sélecteur de vitesse (10) selon la revendication 10, dans lequel ledit premier profil (64) dudit bras (32) a une configuration arquée et définit un second rayon de courbure ayant un centre situé au niveau dudit premier axe (22) et dans lequel ladite came (38) a un second profil (74), ledit second profil (74) de ladite came (38) ayant une configuration arquée correspondant à ladite configuration arquée dudit premier profil (64) dudit bras (32), ledit second profil arqué (74) étant aligné avec ledit second rayon de courbure dudit premier profil arqué (64) lorsqu'il se trouve dans ledit second mode, et ledit premier profil arqué (64) coopérant avec ledit second profil arqué (74) pour empêcher un mouvement de ladite came (38) dans ledit second sens.

12. Ensemble sélecteur de vitesse (10) selon l'une quelconque des revendications 2 à 7, dans lequel ledit bras (32) comprend ladite rainure (66) et dans lequel ladite came (38) définit ledit prolongement (54), ladite rainure (66) dudit bras (32) étant en butée contre ledit prolongement (54) de ladite came (38) en poussant ladite came (38) de sorte qu'elle passe de ladite première position à ladite seconde position lorsque ledit levier de sélection de vitesse (20) pivote dans un premier sens dans ledit premier mode, et en poussant ladite came (38) de sorte qu'elle passe de ladite seconde position à ladite première position lorsque ledit levier de sélection de vitesse (20) pivote dans un second sens dans ledit premier mode.

13. Ensemble sélecteur de vitesse (10) selon l'une quelconque des revendications 2 à 7 et 12, dans lequel ladite rainure (66) dudit bras (32) est définie par un bord supérieur (68) et un bord inférieur (70), ledit bord supérieur (68) et ledit bord inférieur (70) de ladite rainure (66) dudit bras (32) définissant ladite première surface de coopération (52).

14. Ensemble sélecteur de vitesse (10) selon l'une quelconque des revendications précédentes, comprenant en outre un premier trajet de sélection de vitesse (76) et un deuxième trajet de sélection de vitesse (78) globalement parallèle audit premier trajet de sélection de vitesse (76) et ledit levier de sélection de vitesse (20) mobile entre ledit premier trajet de sélection de vitesse (76) et ledit deuxième trajet de sélection de vitesse (78) en passant par un troisième trajet de sélection de vitesse (80) transversal audit premier trajet de sélection de vitesse (76) et audit deuxième trajet de sélection de vitesse (78), dans lequel ledit levier de sélection de vitesse (20) et ledit bras (32) ne sont pas en prise et dans lequel ledit levier de sélection de vitesse (20) bouge indépendamment dudit bras (32) lorsque ledit levier de sélection de vitesse (20) pivote dans ledit deuxième trajet de sélection de vitesse (78) et ledit troisième trajet de sélection de vitesse (80).

15. Procédé de mise en oeuvre d'un ensemble sélecteur de vitesse (10) comportant un levier de sélection de vitesse (20) et un bras (32) disposé autour d'un premier axe (22), le bras (32) comportant une première surface de coopération (52) et une seconde surface de coopération (62), et une came (38) disposée autour d'un second axe (40) espacé du premier axe (22), ledit procédé faisant appel aux étapes consistant à :
pivoter conjointement le levier de sélection de vitesse (20) et le bras (32) autour du premier axe (22) dans un premier mode pour fournir une commande mécanique d'une transmission ;
mettre en coopération la première surface de coopération (52) du bras (32) avec la came (38) pour tourner simultanément la came (38) autour du second axe (40) conjointement avec le bras (32) pivotant dans le premier mode ;
pivoter le levier de sélection de vitesse (20) autour du premier axe (22) dans un second mode pour fournir une commande électronique de la transmission ; et
mettre en butée la seconde surface de coopération (62) du bras (32) contre la came (38) pour empêcher un mouvement de la came (38) pendant le pivotement du levier de sélection de vitesse (20) dans le second mode.

16. Procédé selon la revendication 15, dans lequel le bras (32) tourne autour du premier axe (22) dans un premier sens et dans lequel la came (38) tourne autour du second axe (40) dans un second sens contraire au premier sens lorsque la première surface de coopération (52) du bras (32) coopère avec la came (38).

17. Procédé selon la revendication 15, dans lequel le bras (32) tourne autour du premier axe (22) dans un premier sens et dans lequel la came (38) tourne autour du second axe (40) dans un second sens similaire au premier sens lorsque la première surface de coopération (52) du bras (32) coopère avec la came (38).

18. Procédé selon l'une quelconque des revendications 15 à 17, dans lequel le bras (32) est séparé de la came (38) de sorte que le bras (32) tourne autour du premier axe (22) indépendamment de la came (38) lorsque le levier de sélection de vitesse (20) pivote au moins dans le second mode.

19. Procédé selon l'une quelconque des revendications 15 à 18, dans lequel le levier de sélection de vitesse (20) et le bras (32) pivotent conjointement autour du premier axe (22) dans le second mode.

20. Procédé selon l'une quelconque des revendications 15 à 18, dans lequel le levier de sélection de vitesse (20) et le bras (32) ne sont pas en prise et dans lequel le levier de sélection de vitesse (20) bouge indépendamment du bras (32) lorsque le levier de sélection de vitesse (20) pivote dans le second mode.
